# EUROPÄISCHE PATENTANMELDUNG

(11) **EP 4 410 459 A1**
(43) Veröffentlichungstag der Anmeldung: **07.08.2024**
(21) Anmeldenummer: 23155190.4
(22) Anmeldetag: 06.02.2023
(51) Int. Cl.: B23B 39/00, B23Q 11/12, B25F 5/00

(54) **TRANSMISSIONSVORRICHTUNG MIT EINER VORRICHTUNG ZUR FÖRDERUNG EINES FLUIDS UND ANWENDUNG DER TRANSMISSIONSVORRICHTUNG IN EINER WERKZEUGMASCHINE**

(71) Anmelder: Hilti Aktiengesellschaft, 9494 Schaan (LI)
(72) Erfinder: Schittl, Josef, 6712 Thueringen (AT)
(74) Vertreter: Hilti Aktiengesellschaft Corporate Intellectual Property

(57) **Zusammenfassung**

Die vorliegende Erfindung betrifft eine Transmissionsvorrichtung für eine Werkzeugmaschine, wobei die Transmissionsvorrichtung mindestens eine Antriebswelle und eine Abtriebswelle umfasst und dazu eingerichtet ist, eine Drehbewegung und ein Drehmoment eines Motors der Werkzeugmaschine an ein Werkzeug der Werkzeugmaschine zu übertragen. Die Transmissionsvorrichtung umfasst eine Vorrichtung zur Förderung eines Fluids, wobei die Vorrichtung zur Förderung des Fluids in einer Welle der Transmissionsvorrichtung integriert vorliegt. In einem zweiten Aspekt betrifft die Erfindung eine Verwendung der Transmissionsvorrichtung zur Übertragung einer Drehbewegung und eines Drehmoments eines Motors einer Werkzeugmaschine an ein Werkzeug der Werkzeugmaschine, wobei die Vorrichtung zur Förderung des Fluids insbesondere bei einer abwärtsgerichteten Anwendung der Werkzeugmaschine dazu eingerichtet ist, das Fluid von einem vorderen Bereich der Werkzeugmaschine in Richtung eines hinteren Bereichs der Werkzeugmaschine zu fördern. Mit der Erfindung können vor allem schnelldrehende Komponenten der Transmissionsvorrichtung, die vorzugsweise in einem hinteren Bereich der Werkzeugmaschine angeordnet vorliegen, besonders gut mit dem Fluid versorgt werden, dies insbesondere in einer abwärtsgerichteten Anwendung der Werkzeugmaschine.

## Beschreibung

Die vorliegende Erfindung betrifft eine Transmissionsvorrichtung für eine Werkzeugmaschine, wobei die Transmissionsvorrichtung mindestens eine Antriebswelle und eine Abtriebswelle umfasst und dazu eingerichtet ist, eine Drehbewegung und ein Drehmoment eines Motors der Werkzeugmaschine an ein Werkzeug der Werkzeugmaschine zu übertragen. Die Transmissionsvorrichtung umfasst eine Vorrichtung zur Förderung eines Fluids, wobei die Vorrichtung zur Förderung des Fluids in einer Welle der Transmissionsvorrichtung integriert vorliegt. In einem zweiten Aspekt betrifft die Erfindung eine Verwendung der Transmissionsvorrichtung zur Übertragung einer Drehbewegung und eines Drehmoments eines Motors einer Werkzeugmaschine an ein Werkzeug der Werkzeugmaschine, wobei die Vorrichtung zur Förderung des Fluids insbesondere bei einer abwärtsgerichteten Anwendung der Werkzeugmaschine dazu eingerichtet ist, das Fluid von einem vorderen Bereich der Werkzeugmaschine in Richtung eines hinteren Bereichs der Werkzeugmaschine zu fördern. Mit der Erfindung können vor allem schnelldrehende Komponenten der Transmissionsvorrichtung, die vorzugsweise in einem hinteren Bereich der Werkzeugmaschine angeordnet vorliegen, besonders gut mit dem Fluid versorgt werden, dies insbesondere dann, wenn die Werkzeugmaschine in einer abwärtsgerichteten Anwendung verwendet wird.

### Hintergrund der Erfindung:

Werkzeugmaschinen weisen üblicherweise einen Motor und ein Werkzeug auf, wobei eine Drehbewegung des Motors mittels einer Transmissionsvorrichtung von dem Motor auf das Werkzeug übertragen werden kann. Die Transmissionsvorrichtung kann beispielsweise als Getriebe ausgebildet und ein- oder mehrstufig ausgebildet sein. Die Transmissionsvorrichtung dient auch dazu, das mit dem Motor erzeugte Drehmoment auf das Werkzeug der Werkzeugmaschine zu übertragen, so dass mit der Werkzeugmaschine Arbeiten, wie Bohren, Meißeln, Schleifen, Schneider oder dergleichen, ausgeführt werden können. Die Transmissionsvorrichtung kann Wellen umfassen, mit denen die Drehbewegung und das vom Motor erzeugte Drehmoment auf das Werkzeug übertragen werden können. Die Drehbewegung und das Drehmoment können insbesondere mit Hilfe von Zahnrädern übertragen werden, die an den Wellen angeordnet vorliegen. Die Welle, die sich an den Motor anschließt, wird im Sinne der Erfindung bevorzugt als "Antriebswelle" bezeichnet, während die dem Werkzeug zugewandte Welle der Transmissionsvorrichtung vorzugsweise als "Abtriebswelle" bezeichnet wird. Vor allem im Bereich der Antriebswelle können hohe Drehgeschwindigkeiten auftreten, so dass eine gute Schmierung der entsprechenden Teile unerlässlich ist, um Schäden an der Transmissionsvorrichtung oder ihren Komponenten zu vermeiden.

Zur Schmierung der Transmissionsvorrichtung sind im Stand der Technik Ölpumpen als separate Bauteile vorgeschlagen worden, mit denen das Schmiermittel innerhalb der Werkzeugmaschine transportiert werden kann. Allerdings kann durch dieses zusätzliche Bauteil die Montage der Werkzeugmaschine erschwert werden und es wird unter Umständen mehr Bauraum innerhalb der Werkzeugmaschine benötigt.

Darüber hinaus zeigt sich vor allem bei solchen Anwendungen von Werkzeugmaschinen, bei denen in Richtung eines Erdbodens oder eines Untergrunds gearbeitet wird, dass die Schmierung mangelhaft sein kann und dass bei solchen "abwärtsgerichteten Anwendungen" der Werkzeugmaschine unter Umständen nicht alle Komponenten der Transmissionsvorrichtung optimal mit Schmiermittel versorgt werden können. Aufgrund dieser Mangelschmierung kann es unerwünschterweise zu Schäden an der Transmissionsvorrichtung oder ihren Komponenten kommen.

Die Aufgabe, die der vorliegenden Erfindung zugrunde liegt, besteht darin, die vorstehend beschriebenen Mängel und Nachteile des Standes der Technik zu überwinden und eine kompakte Transmissionsvorrichtung für eine Werkzeugmaschine bereitzustellen, bei der eine optimale Schmierung der Transmissionsvorrichtung und ihrer Komponenten ermöglicht werden kann. Die Schmierung der Transmissionsvorrichtung und ihrer Komponenten soll mit der Erfindung insbesondere für sog. "abwärtsgerichteten Anwendungen" der Werkzeugmaschine verbessert werden, bei denen mit der Werkzeugmaschine in Richtung eines Erdbodens bzw. eines Untergrunds gearbeitet wird. Darüber hinaus soll die Werkzeugmaschine, in der die Transmissionsvorrichtung eingesetzt wird, kompakt ausgebildet sein und leicht montiert werden können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Transmissionsvorrichtung für eine Werkzeugmaschine vorgesehen, wobei die Transmissionsvorrichtung mindestens eine erste Welle und eine zweite Welle umfasst und dazu eingerichtet ist, eine Drehbewegung und ein Drehmoment eines Motors der Werkzeugmaschine an ein Werkzeug der Werkzeugmaschine zu übertragen. Die Transmissionsvorrichtung umfasst eine Vorrichtung zur Förderung eines Fluids, wobei die Vorrichtung zur Förderung des Fluids in einer Welle der Transmissionsvorrichtung integriert vorliegt. Es hat sich gezeigt, dass durch die Integration der Vorrichtung zur Förderung eines Fluid in eine der Wellen der Transmissionsvorrichtung eine sehr effiziente Förderung eines Fluids innerhalb der Werkzeugmaschine bereitgestellt werden kann. Vor allem bei den beschriebenen "abwärtsgerichteten Anwendungen" der Werkzeugmaschine, bei denen mit der Werkzeugmaschine in eine Raumrichtung "nach unten" gearbeitet wird, kann mit der Erfindung und durch die Integration der Vorrichtung zur Förderung eines Fluid in eine der Wellen der Transmissionsvorrichtung eine gute Schmierung von höhergelegenen Bauteilen innerhalb der Werkzeugmaschine erreicht werden. Nachdem es sich bei diesen höhergelegenen Bauteilen insbesondere um unter Umständen sehr schnell drehende Komponenten der Transmissionsvorrichtung handelt, ist eine gute Schmierung dieser schnell drehenden Komponenten besonders wichtig, um Schäden an der Transmissionsvorrichtung zu verhindern. Durch die gute Schmierung der bevorzugt im hinteren Bereich der Werkzeugmaschine untergebrachten Komponenten der Transmissionsvorrichtung kann vorteilhafterweise die Lebensdauer der Transmissionsvorrichtung und insbesondere dieser in abwärtsgerichteten Anwendungen der Werkzeugmaschine höhergelegenen Komponenten erheblich verlängert werden. Darüber hinaus können Wartungsintervalle verlängert werden, so dass mit der Erfindung und insbesondere durch die Integration der Vorrichtung zur Förderung eines Fluid in eine der Wellen der Transmissionsvorrichtung die Einsatz-Effizienz der Werkzeugmaschine wesentlich verbessert werden kann. Außerdem kann mit der Erfindung, insbesondere durch die Integration der Ölpumpe in eine der Wellen der Transmissionsvorrichtung, eine besonders raumsparende Werkzeugmaschine bereitgestellt werden, sowie der Einbau der Ölpumpe wesentlich erleichtert werden kann.

Bei den schnelldrehenden Komponenten, die mit der Erfindung besonders gut geschmiert werden können, kann es sich insbesondere um den Wellendichtring auf der Motorwellen und die Zahnräder einer Getriebestufe der Transmissionsvorrichtung bzw. des Getriebes der Werkzeugmaschine handeln.

Es ist im Sinne der Erfindung bevorzugt, dass der Bereich der Werkzeugmaschine, in dem eine Werkzeugaufnahme zur Aufnahme des Werkzeugs der Werkzeugmaschine angeordnet vorliegt, als vorderer Bereich der Werkzeugmaschine bezeichnet wird und dass der Bereich der Werkzeugmaschine, in dem der Motor der Werkzeugmaschine angeordnet vorliegt, als hinterer Bereich der Werkzeugmaschine bezeichnet wird. Zwischen dem vorderen und dem hinteren Bereich der Werkzeugmaschine liegt vorzugsweise die Transmissionsvorrichtung angeordnet vor, die vorzugsweise einen Antriebsstrang der Werkzeugmaschine bilden kann. Wenn die Werkzeugmaschine beispielsweise als Kernbohrgerät ausgebildet ist, kann das Werkzeug der Werkzeugmaschine als Bohrkrone ausgebildet sein, wobei mit der Bohrkrone im Wesentlichen zylindrische Bohrkerne aus einem Untergrund herausgeschnitten werden können. Die Bohrkrone liegt vorzugsweise in einem vorderen Bereich der Werkzeugmaschine vor. Der hintere Bereich der Werkzeugmaschine kann beispielsweise von einem Hauptkörper gebildet werden, in dem beispielsweise der Motor oder eine Elektronik der Werkzeugmaschine untergebracht werden kann. Vorteilhafterweise kann die Werkzeugmaschine, in der die vorgeschlagene Transmissionsvorrichtung eingesetzt wird, besonders kompakt ausgebildet sein und leicht montiert werden, da die Vorrichtung zur Förderung des Fluids in einer der Wellen der Transmissionsvorrichtung integriert vorliegt und insbesondere kein separates Bauteil mit einem eigenen Bauraumbedarf darstellt. Bei einer "abwärtsgerichteten Anwendungen" der Werkzeugmaschine, bei der mit der Werkzeugmaschine in eine Raumrichtung "nach unten" gearbeitet wird, ist der vordere Bereich der Werkzeugmaschine vorzugsweise dem Erdboden oder dem Untergrund zugewandt, während der hintere Bereich der Werkzeugmaschine die dem Untergrund abgewandte Seite der Werkzeugmaschine darstellt. Die Begriffe "vorderer Bereich" und "hinterer Bereich" gelten für die vorgeschlagene Transmissionsvorrichtung analog. Das bedeutet im Sinne der Erfindung bevorzugt, dass die Abtriebswelle in einem vorderen Bereich der Transmissionsvorrichtung angeordnet vorliegt, während die Antriebswelle in einem hinteren Bereich der Transmissionsvorrichtung angeordnet vorliegt.

Der Antriebsstrang der Werkzeugmaschine und ihre Transmissionsvorrichtung können eine erste Welle und eine zweite Welle umfassen, wobei die erste Welle bevorzugt als "Antriebswelle" und die zweite Welle bevorzugt als "Abtriebswelle" bezeichnet wird. Die Antriebswelle schließt sich vorzugsweise an den Motor der Werkzeugmaschine an und ist vorzugsweise dazu eingerichtet, die vom Motor erzeugte - mithin sehr schnelle - Drehbewegung aufzunehmen und weiterzuleiten. Da sich die Antriebswelle an den Motor anschließt, liegt die Antriebswelle vorzugsweise im hinteren Bereich der Werkzeugmaschine angeordnet vor. Die Drehbewegung und das damit verbundene Drehmoment können mittels Zahnräder und ggf. weiterer Komponenten der Transmissionsvorrichtung an die Abtriebswelle übertragen werden, wobei die Abtriebswelle ihrerseits dazu ausgebildet ist, die Drehbewegung und das Drehmoment an eine Werkzeugaufnahme der Werkzeugmaschine zu übertragen. Dadurch liegt die Abtriebswelle vorzugsweise in einem vorderen Bereich der Werkzeugmaschine angeordnet vor. Eine Aufzählung der genannten Bauteile von einem vorderen Bereich in Richtung eines hinteren Bereichs der Werkzeugmaschine kann vorzugsweise wie folgt lauten: Werkzeug, Werkzeugaufnahme, Abtriebswelle bzw. Spindel, etwaige weitere Bestandteile des Antriebsstrangs bzw. der Transmissionsvorrichtung, wie beispielsweise eine Zwischenwelle, Antriebswelle, Motor.

Erfindungsgemäß ist vorgesehen, dass die Transmissionsvorrichtung eine Vorrichtung zur Förderung eines Fluids umfasst, wobei die Vorrichtung zur Förderung des Fluids in einer Welle der Transmissionsvorrichtung integriert vorliegt. Die Vorrichtung zur Förderung des Fluids kann vorzugsweise von einer Vorrichtung zur Förderung eines Schmiermittels gebildet werden und im Sinne der Erfindung als «Ölpumpe» bezeichnet werden. Vorzugsweise kann die Vorrichtung zur Förderung eines Fluids eine Pumpe umfassen, wobei die Pumpe dazu eingerichtet ist, ein Fluid zu transportieren. Die Vorrichtung zur Förderung eines Fluids kann ein erstes, unteres Ende umfassen, das in ein Fluid, ein Fluidreservoir und/oder einen Fluidsumpf hineinragen kann. Die Vorrichtung zur Förderung eines Fluids kann dazu eingerichtet sein, das Fluid einzusaugen bzw. abzupumpen und in Richtung eines zweiten, oberen Endes der Vorrichtung zur Förderung eines Fluids zu pumpen bzw. zu transportieren. Beispielsweise kann die Vorrichtung zur Förderung eines Fluids so in der Werkzeugmaschine angeordnet vorliegen, dass das erste Ende der Vorrichtung zur Förderung eines Fluids in Richtung eines vorderen Bereichs der Werkzeugmaschine zeigt, während das zweite Ende der Vorrichtung zur Förderung eines Fluids in einen hinteren Bereich der Werkzeugmaschine zeigt. Die Vorrichtung zur Förderung eines Fluids kann im Kontext der vorliegenden Erfindung bevorzugt auch als «integrierte Ölpumpe» bezeichnet werden, denn sie liegt integriert in eine der Wellen der vorgeschlagenen Transmissionsvorrichtung vor.

Vorzugsweise umfasst das Fluid ein Schmiermittel oder das Fluid wird von einem Schmiermittel, wie Öl oder dergleichen, gebildet. Der Fachmann weiß, welche Fluide, Stoffe und Additive zur Schmierung eines Getriebes einer Werkzeugmaschine zum Einsatz kommen können. Die entsprechenden Fluide, Stoffe und Additive werden im Sinne der Erfindung bevorzugt als «Schmiermittel» zusammengefasst oder bezeichnet. Beispielsweise kann die Vorrichtung zur Förderung des Schmiermittels in der ersten oder in der zweiten Welle der vorgeschlagenen Transmissionsvorrichtung integriert vorliegen.

Die Welle, in der die Ölpumpe integriert vorliegt, ist vorzugsweise hohl ausgebildet. Damit weist die Welle vorzugsweise einen Hohlraum zur Aufnahme und Integration der Ölpumpe auf. Die Ölpumpe ist vorzugsweise geometrisch so ausgestaltet, dass sie in den Hohlraum der Welle hineinpasst und von diesem aufgenommen werden kann. Die geometrische Ausgestaltung der Ölpumpe betrifft insbesondere ihre Form und ihre Abmessungen.

Es ist im Sinne der Erfindung jedoch ganz besonders bevorzugt, dass die Transmissionsvorrichtung eine Zwischenwelle umfasst, wobei die Vorrichtung zur Förderung des Schmiermittels in der Zwischenwelle der vorgeschlagenen Transmissionsvorrichtung integriert vorliegt. Es ist im Sinne der Erfindung bevorzugt, dass die Zwischenwelle zwischen der ersten Welle und der zweiten Welle der vorgeschlagenen Transmissionsvorrichtung angeordnet vorliegt. Mit anderen Worten kann die Transmissionsvorrichtung neben der ersten und der zweiten Welle eine zusätzliche Zwischenwelle umfassen, wobei diese Zwischenwelle zwischen der ersten Welle und der zweiten Welle angeordnet vorliegt und wobei in dieser Zwischenwelle die Ölpumpe integriert vorliegt. Es hat sich gezeigt, dass vor allem in dieser Konfiguration eine besonders gute Schmierung der Bauteile und Komponenten der vorgeschlagenen Transmissionsvorrichtung bzw. des Antriebsstrangs ermöglicht werden kann. Dieser Vorteil wird überraschenderweise insbesondere dann erreicht, wenn mit der Werkzeugmaschine in einer Raumrichtung «nach unten» gearbeitet wird, d.h. wenn mit der Werkzeugmaschine ein Erdboden oder ein Untergrund bearbeitet werden soll. Diese nach unten gerichteten Arbeiten an einem Erdboden oder einem Untergrund werden im Sinne der Erfindung bevorzugt als «abwärtsgerichtete Anwendungen» der Werkzeugmaschine bezeichnet. Die nach unten gerichteten oder abwärtsgerichteten Arbeiten können im Sinne der Erfindung bevorzugt auch als Bodenanwendung bezeichnet werden, die sich von sog. Wand- oder Deckenanwendungen unterscheiden. Bei den Wandanwendungen kann beispielsweise in eine vertikale Wand oder Mauer hineingebohrt werden, während bei Deckenanwendungen über Kopf in eine Decke gebohrt wird.

Bei Durchführung von abwärtsgerichteten Anwendungen bilden die Bauteile und Komponenten, die im hinteren Bereich der Werkzeugmaschine vorliegen, wie Motor oder Antriebswelle, die höhergelegenen Bauteile und Komponenten der Werkzeugmaschine, während die Bauteile und Komponenten, die im vorderen Bereich der Werkzeugmaschine vorliegen, die tiefergelegenen Bauteile und Komponenten der Werkzeugmaschine darstellen. Es ist im Sinne der Erfindung bevorzugt, dass vor allem im Bereich des Motors und der Antriebwelle besonders hohe Drehgeschwindigkeiten der Bauteile und Komponenten der vorgeschlagenen Transmissionsvorrichtung auftreten. Daher ist eine gute Schmierung dieser bei abwärtsgerichteten Anwendungen der Werkzeugmaschine höhergelegenen Bauteile und Komponenten besonders wichtig. Es stellt einen besonderen Vorteil der Erfindung und der Integration der Ölpumpe in eine der Wellen der vorgeschlagenen Transmissionsvorrichtung dar, dass vor allem diese - hohen Drehgeschwindigkeiten ausgesetzten - höhergelegenen Bauteile und Komponenten bei Betrieb der Werkzeugmaschine in einem abwärtsgerichteten Arbeitsmodus besonders gut mit Schmiermittel versorgt werden können. Damit leistet die Erfindung einen wichtigen Beitrag, um eine Mangelschmierung und Schäden an der vorgeschlagenen Transmissionsvorrichtung wirksam zu verhindern. Darüber hinaus kann auf diese Weise die Lebensdauer der vorgeschlagenen Transmissionsvorrichtung und ihrer Komponenten erheblich verlängert werden.

Es ist im Sinne der Erfindung bevorzugt, dass die Transmissionsvorrichtung zumindest teilweise in einem abgeschlossenen Raum der Werkzeugmaschine angeordnet vorliegt, wobei der abgeschlossene Raum zumindest teilweise mit einem Fluid gefüllt ist. Der abgeschlossene Raum kann im Sinne der Erfindung bevorzugt auch als «Ölraum» oder «Getrieberaum» bezeichnet werden. Beispielsweise kann ein Volumen der vorgeschlagenen Transmissionsvorrichtung zu 60 % mit Öl oder einem Schmiermittel gefüllt sein, wobei der Öl- oder Getrieberaum vorzugsweise gegenüber anderen Räumen der Werkzeugmaschine öl- bzw. schmiermitteldicht abgedichtet ist. Dadurch kann vorteilhafterweise kein Öl oder Schmiermittel aus dem abgeschlossenen Raum austreten. Aufgrund der Schwerkraft sammelt sich das Öl oder Schmiermittel in einem unteren Bereich des abgeschlossenen Raumes und bildet dort einen Öl- oder Schmiermittelsumpf, der im Sinne der Erfindung bevorzugt auch als «Fluidsumpf» bezeichnet wird. Die Position bzw. Lage dieses Sumpfes kann je nachdem, wie die Werkzeugmaschine gehalten und wie mit der Werkzeugmaschine gearbeitet wird, variieren. Wenn mit der Werkzeugmaschine abwärtsgerichtete Anwendungen ausgeführt werden, kann sich der Sumpf in einem vorderen, tieferliegenden Bereich der Werkzeugmaschine bzw. der Transmissionsvorrichtung ausbilden, wobei ein erstes Ende der Vorrichtung zur Förderung des Fluids in diesen Sumpf hineinragen kann, um das Öl oder Schmiermittel, das sich dort sammelt, abzupumpen und in höhergelegene Bereiche der Werkzeugmaschine bzw. der Transmissionsvorrichtung zu transportieren. In diesen höhergelegenen Bereichen der Werkzeugmaschine bzw. der Transmissionsvorrichtung kann insbesondere das zweite, obere Ende der Vorrichtung zur Förderung des Fluids angeordnet vorliegen. Es ist im Sinne der Erfindung bevorzugt, dass in diesem hinteren Bereich der Werkzeugmaschine bzw. der Transmissionsvorrichtung vor allem die sich besondere schnell drehenden Teil der vorgeschlagenen Transmissionsvorrichtung angeordnet vorliegen, deren Schmierung besonders dringlich ist und deren Schmierung mit der vorgeschlagenen Erfindung besonders gut gewährleistet werden kann. Dieser Vorteil der Erfindung kann - insbesondere bei abwärtsgerichteten Anwendungen der Werkzeugmaschine - dadurch realisiert werden, dass die Ölpumpe integriert in einer der Wellen, vorzugsweise in der Zwischenwelle der Transmissionsvorrichtung, vorgesehen ist. Vorzugsweise ist die Vorrichtung zur Förderung des Fluids dazu eingerichtet, das Fluid bzw. das Schmiermittel aus einem Fluidsumpf in einem vorderen Bereich der Werkzeugmaschine in Richtung von schnelldrehenden Komponenten der Transmissionsvorrichtung in einem hinteren Bereich der Werkzeugmaschine zu fördern. Bei abwärtsgerichteten Anwendungen der Werkzeugmaschine bildet der vordere Bereich einen tiefergelegenen Bereich der Werkzeugmaschine, der einen geringeren Abstand zum Untergrund oder Erdboden aufweist als ein hinterer Bereich der Werkzeugmaschine, der bei abwärtsgerichteten Anwendungen der Werkzeugmaschine einen höhergelegenen Bereich der Werkzeugmaschine bildet und der einen größeren Abstand zum Untergrund oder Erdboden aufweist als der vordere Bereich der Werkzeugmaschine.

Es ist im Sinne der Erfindung bevorzugt, dass die Zwischenwelle und die Vorrichtung zur Förderung des Fluids in einem mittleren Bereich der Werkzeugmaschine bzw. der vorgeschlagenen Transmissionsvorrichtung angeordnet vorliegen.

Der Antriebsstrang der Transmissionsvorrichtung weist eine Abtriebsseite mit einer Abtriebswelle und eine Antriebsseite mit einer Motorwelle auf. Die Motorwelle kann im Sinne der Erfindung vorzugsweise auch als Antriebs- oder erste Welle bezeichnet werden. Es ist im Sinne der Erfindung bevorzugt, dass die Abtriebswelle über ein Zahnrad von der Motorwelle antreibbar ist. Es kann im Sinne der Erfindung bevorzugt sein, dass die vorgeschlagene Transmissionsvorrichtung der Werkzeugmaschine mehr als diese zwei Wellen aufweist. Beispielsweise kann die Werkzeugmaschine mindestens eine Zwischenwelle umfassen, mit der die Drehbewegung bzw. das Drehmoment der Motorwelle auf die Abtriebswelle übertragen werden kann und die vorzugsweise zwischen der Motorwelle und der Abtriebswelle vorgesehen ist. Die Transmissionsvorrichtung kann im Sinne der Erfindung bevorzugt auch als Übertragungseinheit oder als Übertragungsvorrichtung bezeichnet werden. Es ist im Sinne der Erfindung bevorzugt, dass die Abtriebsseite des Antriebsstrangs in Richtung eines Werkzeugs der Werkzeugmaschine orientiert ist und in einem vorderen Bereich der Werkzeugmaschine angeordnet vorliegt, während die Antriebsseite des Antriebsstrang in Richtung eines Motors der Werkzeugmaschine orientiert ist und in einem hinteren Bereich der Werkzeugmaschine angeordnet vorliegt (siehe auch: Fig. 2). Es ist im Sinne der Erfindung bevorzugt, dass die Abtriebsseite des Antriebsstrangs bei abwärtsgerichteten Anwendungen der Werkzeugmaschine einen tiefergelegenen Bereich der Werkzeugmaschine darstellt, während die Antriebsseite des Antriebsstrang bei abwärtsgerichteten Anwendungen der Werkzeugmaschine einen höhergelegenen Bereich der Werkzeugmaschine darstellt. Die Abtriebsseite des Antriebsstrangs stellt vorzugsweise eine «langsame» bzw. «langsam drehende» Seite des Antriebsstrangs dar, während die Antriebsseite des Antriebsstrang die «schnelle» oder «schnell drehende» Seite des Antriebsstrangs darstellt. Die schnelle Seite des Antriebsstrangs liegt über die Motorwelle mit dem Motor der Werkzeugmaschine verbunden vor, während die langsame Seite des Antriebsstrangs über die Abtriebswelle mit dem Werkzeug der Werkzeugmaschine verbunden vorliegt. Bei der Werkzeugmaschine kann es sich beispielsweise um ein Kernbohrgerät handeln, das als Werkzeug eine Bohrkrone aufweist. Die schnelle Seite des Antriebsstrangs kann vorzugsweise auch als «Motorseite» des Antriebsstrangs der Werkzeugmaschine bezeichnet werden.

Der Antrieb des Werkzeugs der Werkzeugmaschine erfolgt im Kontext der vorliegenden Erfindung durch die Motorwelle des Antriebsstrangs der Werkzeugmaschine, die ihrerseits von dem Motor der Werkzeugmaschine zu einer Drehbewegung angetrieben wird. Durch die Drehung des Motors der Werkzeugmaschine wird die Motorwelle zu einer Drehbewegung angetrieben. Die Ritzel der Motorwelle greifen in die Zwischenräume zwischen den Zähnen eines Zahnrads der Abtriebswelle ein, so dass die Drehbewegung der Motorwelle auf das Zahnrad und die damit verbundene Abtriebswelle übertragen wird. Alternativ kann zwischen der Antriebs- und der Abtriebswelle eine Zwischenwelle anordnet vorliegen.

In einem zweiten Aspekt betrifft die Erfindung eine Verwendung der Transmissionsvorrichtung zur Übertragung einer Drehbewegung und eines Drehmoments eines Motors einer Werkzeugmaschine an ein Werkzeug der Werkzeugmaschine, wobei die Vorrichtung zur Förderung eines Fluids insbesondere bei einer abwärtsgerichteten Anwendung der Werkzeugmaschine dazu eingerichtet ist, das Fluid von einem vorderen Bereich der Werkzeugmaschine in Richtung eines hinteren Bereichs der Werkzeugmaschine zu fördern. Die für die Transmissionsvorrichtung eingeführten Begriffe, Definitionen und technischen Vorteile gelten vorzugsweise für die Verwendung der Transmissionsvorrichtung analog. Bei der Verwendung der Transmissionsvorrichtung kann die Werkzeugmaschine ein Kernbohrgerät und das Werkzeug der Werkzeugmaschine eine Bohrkrone sein. Es hat sich gezeigt, dass die vorgeschlagene Transmissionsvorrichtung mit der integrierten Ölpumpe, die in einer der Wellen der Transmissionsvorrichtung integriert vorliegt, insbesondere bei abwärtsgerichteten Anwendungen besonders gut dazu geeignet ist, eine gute Schmierung und optimale Versorgung von höhergelegenen Komponenten und Bauteilen der Werkzeugmaschine bzw. der vorgeschlagenen Transmissionsvorrichtung sicherzustellen. Dadurch kann eine Mangelschmierung und Beschädigungen an der Transmissionsvorrichtung oder ihren Komponenten besonders sicher verhindert werden. Außerdem kann mit der Erfindung eine besonders kompakte und leicht zu montierende Werkzeugmaschine bereitgestellt werden.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigen:

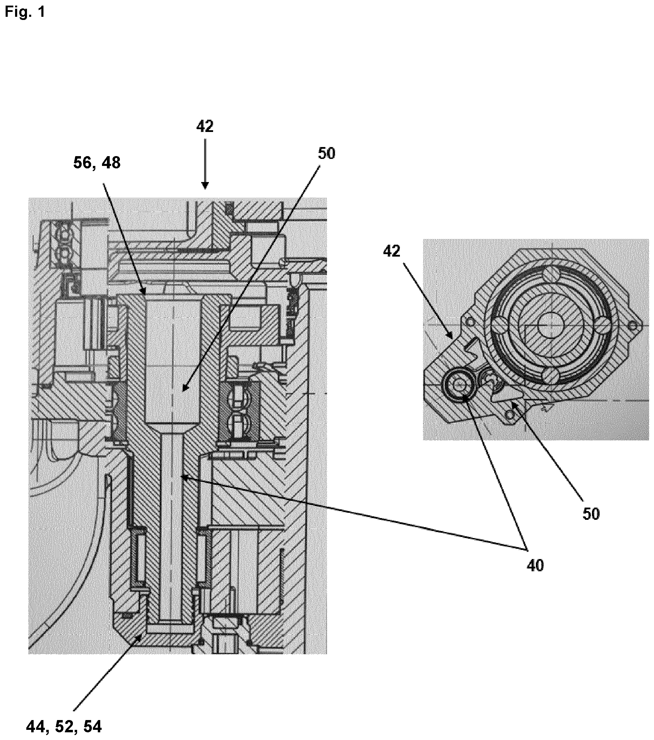

- Fig. 1: Detailansicht einer bevorzugten Ausgestaltung der Transmissionsvorrichtung, wobei die Vorrichtung zur Förderung eines Fluids in einer Zwischenwelle integriert vorliegt.

### Ausführungsbeispiele und Figurenbeschreibung:

Figur 1 zeigt eine Detailansicht einer bevorzugten Ausgestaltung der Transmissionsvorrichtung 10, wobei in dem in Figur 1 dargestellten Ausführungsbeispiel der Erfindung die Vorrichtung 40 zur Förderung des Fluids 50 in einer Zwischenwelle 42 integriert vorliegt. Dargestellt ist insbesondere eine Zwischenwelle 42 als Teilausschnitt einer bevorzugten Ausführungsform der Transmissionsvorrichtung 10. Ein Teil der dargestellten Transmissionsvorrichtung 10 liegt in einem abgeschlossenen Raum 38 (nicht dargestellt) angeordnet vor, der im Sinne der Erfindung als Öl- oder Getrieberaum 38 bezeichnet werden kann. Dieser abgeschlossene Raum 38 kann zu einem gewissen Grad mit einem Fluid 50 gefüllt sein, wobei das Fluid 50 vorzugsweise von einem Schmiermittel, wie beispielsweise Öl, gebildet wird. Der Füllstand des abgeschlossenen Raumes 38 mit dem Fluid 50 wird in Fig. 1 mit einer andersartigen Färbung bzw. einer Schraffur angedeutet. Die Vorrichtung 40 zur Förderung des Fluids 50 ist in Figur 1 so dargestellt, wie sie in einer abwärtsgerichteten Anwendung einer Werkzeugmaschine (nicht dargestellt) angeordnet vorliegt. Dabei liegt ein erstes, unteres Ende 54 der Vorrichtung 40 zur Förderung des Fluids 50 in einem vorderen, tiefergelegenen Bereich 44 der Werkzeugmaschine angeordnet vor, während ein zweites, oberes Ende 56 der Vorrichtung 40 zur Förderung des Fluids 50 in einem hinteren, höhergelegenen Bereich 48 der Werkzeugmaschine angeordnet vorliegt (nicht dargestellt). Die Vorrichtung 40 zur Förderung des Fluids 50 ist dazu eingerichtet, ein Fluid 50 aus einem Fluidsumpf 52 in einen weiter hinten oder höhergelegenen Bereich 48 der Werkzeugmaschine oder der Transmissionsvorrichtung 10 zu pumpen. Dadurch können insbesondere die höhergelegenen, schnell rotierenden Komponenten 46 der Werkzeugmaschine oder der Transmissionsvorrichtung 10 optimal mit Schmiermittel versorgt werden.

### Bezugszeichenliste

- 10: Transmissionsvorrichtung
- 12: Werkzeugaufnahme
- 14: Motor
- 20: Abtriebsseite
- 22: Abtriebswelle, zweite Welle
- 30: Antriebsseite
- 32: Motorwelle, Antriebswelle oder erste Welle
- 34: Zahnrad
- 36: Werkzeug der Werkzeugmaschine
- 38: abgschlossener Raum, Öl- oder Getrieberaum
- 40: Vorrichtung zur Förderung eines Fluids
- 42: Zwischenwelle
- 44: vorderer Bereich der Werkzeugmaschine
- 46: schnell drehende Komponenten der Transmissionsvorrichtung
- 48: hinterer Bereich der Werkzeugmaschine
- 50: Fluid
- 52: Fluidsumpf
- 54: erstes Ende der Vorrichtung zur Förderung des Fluids
- 56: zweites Ende der Vorrichtung zur Förderung des Fluids

## Patentansprüche

1. Transmissionsvorrichtung (10) für eine Werkzeugmaschine, wobei die Transmissionsvorrichtung (10) mindestens eine erste Welle (32) und eine zweite Welle (22) umfasst und dazu eingerichtet ist, eine Drehbewegung und ein Drehmoment eines Motors (14) der Werkzeugmaschine an ein Werkzeug (36) der Werkzeugmaschine zu übertragen,
**dadurch gekennzeichnet, dass**
eine Vorrichtung (40) zur Förderung eines Fluids (50) in einer Welle der Transmissionsvorrichtung (10) integriert vorliegt.

2. Transmissionsvorrichtung (10) nach Anspruch 1
**dadurch gekennzeichnet, dass**
die Transmissionsvorrichtung (10) zumindest teilweise in einem abgeschlossenen Raum (38) der Werkzeugmaschine angeordnet vorliegt, wobei der abgeschlossene Raum (38) zumindest teilweise mit einem Fluid (50) gefüllt ist.

3. Transmissionsvorrichtung (10) nach Anspruch 1 oder 2
**dadurch gekennzeichnet, dass**
das Fluid (50) ein Schmiermittel umfasst.

4. Transmissionsvorrichtung (10) nach einem der vorhergehenden Ansprüche
**dadurch gekennzeichnet, dass**
die Transmissionsvorrichtung (10) eine Zwischenwelle (42) umfasst, wobei die Zwischenwelle (42) zwischen der ersten Welle (32) und der zweiten Welle (22) angeordnet vorliegt.

5. Transmissionsvorrichtung (10) nach Anspruch 4
**dadurch gekennzeichnet, dass**
die Vorrichtung (40) zur Förderung des Fluids (50) in der Zwischenwelle (42) integriert vorliegt.

6. Transmissionsvorrichtung (10) nach einem der vorhergehenden Ansprüche
**dadurch gekennzeichnet, dass**
die Vorrichtung (40) zur Förderung des Fluids (50) dazu eingerichtet ist, das Fluid (50) aus einem Fluidsumpf (52) in einem vorderen Bereich (44) der Werkzeugmaschine in Richtung von schnelldrehenden Komponenten (46) der Transmissionsvorrichtung (10) in einem hinteren Bereich (48) der Werkzeugmaschine zu fördern.

7. Transmissionsvorrichtung (10) nach einem der vorhergehenden Ansprüche
**dadurch gekennzeichnet, dass**
der Bereich der Werkzeugmaschine, in dem eine Werkzeugaufnahme (12) zur Aufnahme des Werkzeugs (36) der Werkzeugmaschine angeordnet vorliegt, als vorderer Bereich (44) der Werkzeugmaschine bezeichnet wird und dass der Bereich der Werkzeugmaschine, in dem der Motor (14) der Werkzeugmaschine angeordnet vorliegt, als hinterer Bereich (48) der Werkzeugmaschine bezeichnet wird.

8. Verwendung der Transmissionsvorrichtung (10) nach einem der vorhergehenden Ansprüche zur Übertragung einer Drehbewegung und eines Drehmoments eines Motors (14) einer Werkzeugmaschine an eine Werkzeugaufnahme (12) der Werkzeugmaschine
**dadurch gekennzeichnet, dass**
die Vorrichtung (40) zur Förderung eines Fluids (50) insbesondere bei einer abwärtsgerichteten Anwendung der Werkzeugmaschine dazu eingerichtet ist, das Fluid (50) von einem vorderen Bereich (44) der Werkzeugmaschine in Richtung eines hinteren Bereichs (48) der Werkzeugmaschine zu fördern.

9. Verwendung nach Anspruch 8
**dadurch gekennzeichnet, dass**
die Werkzeugmaschine ein Kernbohrgerät und das Werkzeug (36) der Werkzeugmaschine eine Bohrkrone ist.
